# EUROPEAN PATENT SPECIFICATION

(11) **EP 2 161 962 B1**
(45) Date of publication and mention of the grant of the patent: **20.02.2013**
(21) Application number: 08163573.2
(22) Date of filing: 03.09.2008
(51) Int. Cl.: H04W 76/02

(54) **Ad-hoc connection in communications system**
Ad-hoc-Verbindung in einem Kommunikationssystem
Connexion ad-hoc dans un système de communications

(43) Date of publication of application: 10.03.2010
(73) Proprietor: TeliaSonera AB, 106 63 Stockholm (SE)
(72) Inventor: Seppänen, Juho, 00270 Helsinki (FI)
(74) Representative: Äkräs, Tapio Juhani

(56) References cited:
- WO-A-01/15387
- WO-A-2004/080103
- GB-A- 2 390 510
- US-A1- 2003 235 174
- US-A1- 2004 127 214

## Description

### FIELD OF THE INVENTION

The present invention relates to a method of providing a communications service to a user terminal, and more particularly to establishing an ad-hoc connection between user terminals.

### BACKGROUND OF THE INVENTION

A rich communication suite (RCS) initiative is an effort of a group of telecommunications operators and vendors for enhancing the adoption of enhanced mobile applications and services providing an interoperable, convergent, rich communication experience.

In wireless communications, radio waves, microwaves or infrared links take the place of physical cables. A wireless local area network (WLAN) refers to a local area network that uses wireless radio connections as transmission path. A WLAN terminal may operate in two modes, in an infrastructure mode and in an ad-hoc mode. The infrastructure mode refers to a conventional communication carried out between terminals via an access point (that also may or may not be connected to a wired network). The ad-hoc mode refers to a mode where two or more terminals communicate with each other directly, without the use of base stations. A terminal is set in the ad-hoc mode, and the user of the terminal creates an ad-hoc network name for the ad-hoc connection formed. Other user terminals that are located "close" to the terminal are then able to detect the terminal publishing the ad-hoc network. The terminal may at the same time search for nearby networks in the infrastructure mode and in the ad-hoc mode.

In current systems the terminal is not able to use the infrastructure mode and the ad-hoc mode at the same time with a single WLAN radio (mobile terminals typically have one WLAN radio only). This means that if a WLAN terminal is connected to a rich communication environment (such as RCS) via WLAN in the infrastructure mode, it cannot at the same time form an ad-hoc connection via WLAN in the ad-hoc mode. The ad-hoc connection may in that case be created by using the existing WLAN connection in the infrastructure mode, but then the traffic goes via the access point in use. If the terminal with a WLAN capability is connected to the rich communication environment using the operator network (e.g. 2G or 3G), the WLAN radio is free for other usage.

US 2004/0127214 A1 discloses a method for peer-to-peer communications between wireless terminals. The terminal has transceiver components that are configured for selective operation either in an infrastructure mode for infrastructure communication with a network base station and in a P2P communications mode for P2P communication with other terminals. The terminal is switched between infrastructure mode and P2P mode based on quality of service criteria.

WO 01/15387 A1 relates to a method for direct mode communication in a situation where a first and a second mobile terminal are associated to the same access point. The first mobile terminal sends a "hello" message to the second mobile terminal. The second mobile terminal checks whether the "hello" message is from the right sender, i.e. compares the MAC-Id received in the message with the one issued by the access point.

US 2003/0235174 A1 discloses a solution where a secure connection is established between terminals with the aid of a cellular network. Information transferred over a signalling link to the cellular network may include user authentication, user ID retrieval and mapping, security parameters allowing for secure non-cellular ad-hoc link establishment, and radio resource management messages.

A problem associated with the above arrangement is that communication that most loads the network (e.g. file transfer) is assumed to be conveyed in the rich communication environment via the operator network (and via 2G, 3G radio path). The operator network (e.g. 2G, 3G) is expensive to use, it has a limited capacity, and the load on it is constantly growing. Another option for an additional direct connection between the terminals is to use Bluetooth. The problem with Bluetooth is that it is quite slow.

### BRIEF DESCRIPTION OF THE INVENTION

An object of the present invention is thus to provide a method and an apparatus for implementing the method so as to solve the above problems. The objects of the invention are achieved by a method, system, network node, terminal and a computer program product which are characterized by what is stated in the independent claims. Preferred embodiments of the invention are disclosed in the dependent claims.

The invention involves establishing an ad-hoc connection between terminals of a communications system where a first terminal is connected to a first communications network (e.g. a mobile network) or to a second communications network (e.g. a local area network), and a second terminal is connected to the first communications network or to the second communications network. In the method, an operator service environment unit (e.g. RCS) receives a communication request from the first terminal. The communication request indicates that the first terminal wishes to start an enhanced communication with the second terminal, and the request is forwarded from the operator service environment unit to the second terminal. The system is also arranged to obtain information related to a short-range communication capability of the first terminal and the second terminal. If the first terminal and the second terminal are capable of using an appropriate short-range communication medium (e.g. a wireless local area network), the method comprises the steps of providing information on the short-range communication capability of the first terminal to the second terminal and/or vice versa, and requesting the first or the second terminal to establish, on the basis of the provided information, a mutual ad-hoc connection between the first and the second terminals, the ad-hoc connection being implemented by utilizing the short-range communication medium, and utilizing the ad-hoc connection for the enhanced communication between the first and the second terminals. Required WLAN ad-hoc parameters for the ad-hoc connection are transmitted by utilizing near-field communication NFC technique by means of a physical contact between the first and the second terminals.

An advantage of the present solution is that it enables avoiding unnecessary loading on the operator's network as the enhanced communication, such as file transfer, is carried out via the short-range communication medium. The present solution enables users to get a fast link for mutual communication, wherein the reliability of the link is improved as the authentication and the required parameters of the terminals can be carried out by the secure operator service environment.

### BRIEF DESCRIPTION OF THE DRAWINGS

In the following the invention will be described in greater detail by means of preferred embodiments with reference to the attached drawings, in which
Figure 1 illustrates a communications system according to a first embodiment of the present solution;
Figure 2 illustrates a communications system according to a second embodiment of the present solution
Figure 3 illustrates signalling according to a first embodiment of the present solution;
Figure 4 illustrates signalling according to a second embodiment of the present solution;
Figure 5 is a flow chart illustrating the functioning of a communication network element according to an embodiment of the present solution;
Figure 6 is a flow chart illustrating the functioning of a first user terminal according to the first embodiment of the present solution;
Figure 7 is a flow chart illustrating the functioning of a first user terminal according to the second embodiment of the present solution;
Figure 8 is a flow chart illustrating the functioning of a second user terminal according to the first embodiment of the present solution;
Figure 9 is a flow chart illustrating the functioning of a second user terminal according to the second embodiment of the present solution.

### DETAILED DESCRIPTION OF THE INVENTION

An established ad-hoc connection refers to peer-to-peer connection between wireless user terminals, where the communication is supported via wireless-to-wireless transmission. The ad-hoc network architecture need not to include a base station or central control unit. The ad-hoc network may be formed between devices that are physically near to each other, by utilizing WLAN or some other short-range communication medium.

In the following, embodiments of the present solution will be described with reference to a cellular or wireless communications system, such as a third generation (or beyond 3G) mobile communications system or WLAN (wireless local area network). However, the solution is not to be restricted to these embodiments. The present solution is applicable to any user terminal, network node, corresponding component(s), and/or to any communication system or any combination of different communication systems capable of providing an advanced communication service to user terminals. The communication system may be a fixed communication system or a wireless communication system or a communication system utilizing both fixed networks and wireless networks. The protocols used, the specifications of communication systems and network nodes, especially in mobile and wireless communication, develop rapidly. Such development may require extra changes to an embodiment. Therefore, all words and expressions should be interpreted broadly and they are intended to illustrate, not to restrict, the embodiment. The relevant inventive aspect is the functionality concerned, not the network element or equipment where it is executed. For example, instead of RCS, any other rich communication environment providing a file transfer (or some other user-to-user action) could be used, such as a VoIP (voice over Internet protocol) service.

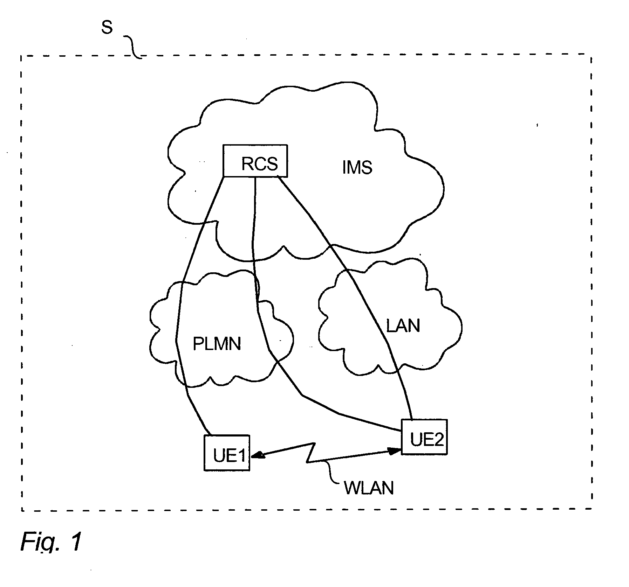

Figure 1 illustrates a communications system S according to a first embodiment of the present solution. Referring to Figure 1, the communications system S comprises an operator network, such as an Internet protocol (IP) multimedia subsystem IMS. The communications system S further includes a communications network such as a mobile operator network PLMN (e.g. a 3G network or a 2G network), and/or a local area network LAN (such as WLAN or Ethernet, with e.g. a home ADSL (asymmetric digital subscriber line)). The IP multimedia subsystem IMS includes an operator service environment unit, such as a rich communication suite RCS environment. The system S also comprises a first user terminal UE1 and a second user terminal UE2. The first user terminal UE1 is able to connect to RCS via the mobile operator network PLMN, and the second user terminal UE2 is able to connect to RCS via the public land mobile network (PLMN) and/or via the local area network (LAN). The first and the second user terminals UE1, UE2 are able to connect to each other via RCS. In Figure 1, the first and the second user terminals UE1, UE2 are also able to connect to each other via a fast short-range communication medium, such as a wireless local area network WLAN, by utilizing a direct mode function of the user terminal UE1, UE2. Figure 1 is a simplified version of a cellular, wired or wireless network structure showing only components necessary for illustrating the first embodiment, even though those skilled in the art know that a general communications system also comprises other functions and structures, which do not have to be described in more detail herein. Although each network node or function UE1, UE2, IMS, RCS, PLMN, LAN, WLAN has been depicted as one entity, different modules and memory may be implemented in one or more physical or logical entities. It should be noted that the user terminals may also be connected to the same communications network (e.g. both connected to PLMN), instead of being connected to different communications networks.

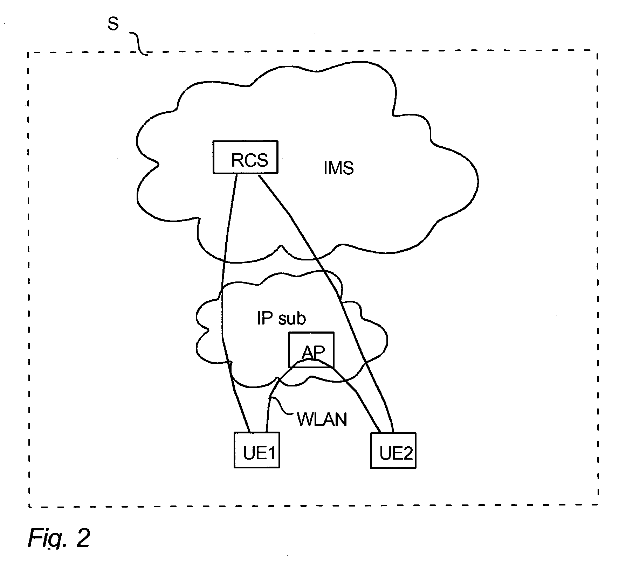

Figure 2 illustrates a communications system S according to a second embodiment of the present solution. Referring to Figure 2, the communications system S comprises an operator network, such as an Internet protocol (IP) multimedia subsystem IMS. The communications system S further includes a communications network such as an Internet protocol subnet IP sub including an access node such as a WLAN access point AP. The IP multimedia subsystem IMS includes an operator service environment, such as a rich communication suite RCS environment. The system S also comprises a first user terminal UE1 and a second user terminal UE2. The first user terminal UE1 and the second user terminal UE2 are able to connect to RCS via the IP subnet. The first and the second user terminals UE1, UE2 are able to connect to each other via RCS. In Figure 2, the first and the second user terminals UE1, UE2 are also able to connect to each other via a mutual peer-to-peer (P2P) connection, by utilizing the WLAN access point AP. Figure 2 is a simplified version of a wireless network structure showing only components necessary for illustrating the second embodiment, even though those skilled in the art know that a general communications system also comprises other functions and structures, which do not have to be described in more detail herein. Although each network node or function UE1, UE2, IMS, RCS, IP sub, AP, WLAN has been depicted as one entity, different modules and memory may be implemented in one or more physical or logical entities.

By means of the present solution, the first user terminal UE1 and the second user terminal UE2 are able to create a direct connection to each other, if UE1 and UE2 are within the area of the same access point, base station and/or sub-network. This may be implemented by means of an RCS platform, but the present solution is not, however, restricted to the RCS platform. The present solution enables a 3G/WLAN combination when creating a direct mode connection. By means of 3G, a control connection is maintained to RCS, and the forming of an ad-hoc connection suitable for a service (e.g. file transfer) is started in WLAN (or some other short-range communication medium), using the 3G connection for negotiating the ad-hoc connection. The present solution enables two (or more) user terminals to create a direct mode connection with each other also when the user terminals are in WLAN. RCS is an example of a platform on top of which various mobile services may be created.

If UE1 and UE2 are registered in RCS via WLAN and if they happen to be within the same access point AP (and/or within the same sub-network), UE1 and UE2 may (automatically) try to create a P2P connection, if the WLAN access point AP (or a sub-network with multiple access points in case of an extended WLAN environment such as Homerun) allows P2P connections. If P2P is not possible, then the P2P possibility is not advertised to the users. Thus the present solution is not restricted to the case where WLAN is "free" (i.e. not currently used by the user terminal) and where the RCS connection is carried out e.g. by means of 3G, HSDPA, HSUPA, 4G etc.

The present solution is not restricted to RCS, instead it may generally relate to a service that enables providing users with e.g. a file transfer function. For example, it may relate to a VoIP service supporting file transfer in addition to other communication services. Or it may relate to any other centralized service via which user terminals are able to connect to each other.

The present solution enables an automatic P2P discovery and communication establishment function in RCS environment for file transfer, for example, when clients are "nearby" (i.e. within the range of WLAN or other fast short-range communication medium). P2P communication is then used as a secondary option medium if supported by the user terminals and if the user terminals are within range.

The present solution may utilize automatic and/or user-initiated polling. In WLAN, a client in the user terminal advertises an RCS-specific ad-hoc network. An RCS user profile may include an ad-hoc name such that an initial identification of a nearby "friend" (i.e. another user terminal) can be carried out. The ad-hoc network name may be e.g. a hashed name of the user's ID (i.e. of the user's MSISDN).

Nearby ad-hoc networks may be polled for friends, provided that the user terminal has WLAN turned on and is constantly advertising its ad-hoc network. Another option is that WLAN is activated if the users wish to start the file transfer. In that case, the advertising of the ad-hoc network is started when needed. When the user is about to initiate a communication with a friend (maybe for a specific service e.g. file transfer), the client checks if the friend is nearby, or a separate service launches the checking of nearby friends (i.e. it checks networks in the range whether or not they match friends' ad-hoc names). A backend may also be arranged to identify whether or not friends are within the same base station and/or closely located, on the basis of GPS (global positioning system) coordinates. One or more base stations may be used for determining the location of the user terminal. Information on signal strengths to multiple nearby base stations may be used to identify a more precise location of the user terminal.

The present solution also enables a secure and easy session setup between the user terminals by utilizing mutual and automatic authentication via an RCS service (based on IMS authentication). The RCS service enables exchange of secure keys via the RCS service instead of exchanging them directly between the user terminals. This makes it possible to assure that the terminal owners really are those who they claim to be. An alternative implementation is that the user terminals are authenticated and connected to RCS using WLAN, and if these terminals are under the same access point and/or sub-network then P2P connections can be created. This capability may be advertised to the clients.

The present solution provides a P2P option for users of an operator service. It enables an automatic P2P discovery and communication facility in an RCS environment for file transfer etc. when friends are nearby (i.e. when the users are within the range of WLAN or some other fast short-range communication medium). Minimal user action is needed to facilitate this alternative way to communicate (i.e. the system is well automated). Benefits of the present solution include avoiding unnecessary loading of the operator's mobile network, especially in file transfers. The users are able to get (due to automatic detection) a fast and reliable (as authentication happens via IMS) link for mutual communication (e.g. file transfer) easily. In order to utilize the present solution, the corresponding users should use the same operator service; not necessarily the same operator, if the operators' services are interoperable (as RCS aims to be). Basically, the present P2P solution is a user terminal client functionality, but the server side (i.e. the service) may assist in order to facilitate an automatic P2P connection establishment. The rich communication service (such as RCS) and the user terminals may include a respective client. The terminals have the same short-range communication capability (such as WLAN). Preferably, the access technology (e.g. WLAN) to be used for the short-range communication is not used to connect to the operator service (instead, e.g. 3G is used to leave the WLAN connection free for use in the P2P communication).

According to a first embodiment of the present solution, the environment of use includes as a primary connection (access network) a 3G or some other network operator access network, and a local area network (LAN) with access to the operator network/service. Optionally, a WLAN connection is also possible both for the service and the P2P connection. The service includes a rich communication service such as RCS, provided by an operator. At first, the users communicate mutually via the (same) service. Then, the service may allow a P2P connection between the users for specific purposes (e.g. file transfer). The P2P connection can be used as a secondary medium if supported by the terminals and the short-range communication medium and if the terminals are within the range of the short-range communication medium. The network may be arranged to define to which services it allows a P2P connection to be established. In the P2P connection, the terminals use an ad-hoc connection without the need of access points and/or base stations. The required information (e.g. MAC (media access control) addresses, WLAN ad-hoc name, IP addresses etc.) and security negotiations are made using the operator service (such as RCS) to which both user terminals are connected. The ad-hoc connection may be formed between two or more user terminals using the same service. Many user terminals support WLAN, so it is mentioned herein as an example of a short-range communication medium. However, it should be noted that any other short-range communication medium that supports P2P connectivity may also be used.

According to a second embodiment of the present solution, the environment of use includes a wireless local area network WLAN both for the service and the P2P connection. If the corresponding user terminals (or one of them) are using WLAN in the connection to the operator service, a direct P2P connection cannot be made (as the user terminals can be connected to one WLAN AP per terminal at a time only). In that case, the user terminals may try to use the existing WLAN connection in order to establish the P2P connection via their mutual local WLAN access point (or access points, if multiple access points are used in the same IP sub-network). This is possible if the operator service detects that the user terminals are in the same sub-network (detected on the basis of the IP address(es) of the user terminals). The user terminals may try to establish a mutual P2P connection, if the local WLAN network allows it. If the IP subnet or corresponding WLAN AP for some reason (e.g. a firewall restriction) denies P2P connections, the original connection via the operator service is used as it would be without a P2P option. According to the present solution, the clients in the terminals may automatically (i.e. without the users' involvement) communicate via the operator service in order to find an efficient way to enable the file transfer (or any other functionality desired for the P2P connectivity in the service context).

The present solution enables an automatic (or semi-automatic) discovery of a nearby friend in a communications system. An RCS user profile may include the ad-hoc name, so that initial identification of a nearby friend may be carried out. The friend's identification may be an ad-hoc network name that may be hashed, for example, from the user's identification (i.e. MSISDN (mobile subscriber international ISDN number)). The service notifies the user that the other user terminal enables the access network to check that it is nearby (i.e. whether the friend's ad-hoc network can be heard). In WLAN, the client advertises an RCS-specific ad-hoc network that the friends are able to identify when they are within the range of WLAN (RCS examples are used herein for illustration purposes; other applicable alternatives may also be used, as described above). It is checked whether any of the ad-hoc terminals in the range fits to the friend's ID received from the service.

The present solution further enables automatic or user-initiated polling alternatives for how to poll friends. Nearby ad-hoc networks may be polled for friends. Another option is that when the user is about to initiate a communication with a friend (maybe for specific services only, e.g. for file transfer) the client checks whether the friend is nearby. Yet another option is a separate service for launching the checking of nearby friends (i.e. the networks in the range are checked whether they match friends' ad-hoc names). The backend network may also identify if friends are within the same (or adjacent) base station or closely located on the basis of GPS (global positioning system) coordinates, and only then advise to start polling for a friend. Thus, if it is detected that the users are "far" from each other, it may not be expedient to carry out the polling. The GPS solution is not mandated by the present solution, but GPS may be utilized in order to optimize the present functionality. If the friends are closely located, the service may notify users to start the polling (if necessary).

The present solution still further enables a secure and easy session setup between user terminals. If the service has discovered that the user terminals are close to each other (and want to initiate a session e.g. for file transfer), authentication and a link test are started. This means that MAC addresses of the parties (i.e. of the user terminals) are exchanged via the service for the P2P connection in order to identify the user terminals via the P2P connection. A mutual authentication allows a first user terminal to permit (or deny) incoming connections of a second user terminal. The mutual authentication is carried out via the RCS service (based on IMS authentication). A centralized service used by the parties enables exchange of secure keys via the service instead of directly between terminals, thus making the process more secure and providing a possibility for automation. When the user terminals have established the direct secure P2P connection they may start to communicate (e.g. start to transfer files without loading the operator network). If the users are using the same WLAN access point, the P2P connection may automatically be tested under the access point; otherwise the client just does not advertise that P2P possibility to the user terminal.

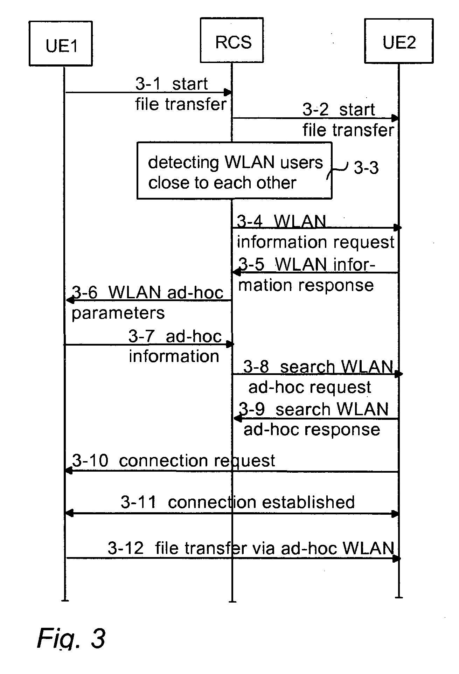

Figure 3 illustrates signalling according to the first embodiment of the present solution, wherein the users are logged in to the operator service (e.g. RCS) via e.g. LAN and/or 3G. Referring to Figure 3, the user of the first user terminal UE1 wishes to start file transmission (or some other suitable communication service) to a second user terminal UE2. This means that a communication request such as a start file transfer message 3-1, 3-2 is transmitted from UE1 via RCS to UE2. According to the present solution, on the basis of the messages 3-1 and 3-2, it is checked and detected 3-3 in RCS whether UE1 and UE2 are WLAN-capable (or some other suitable short-range communication) users that are "close" to each other (as described above). The detection of whether the user terminals have WLAN may be based e.g. on file transfer capability information. The detection of whether the user terminals are close to each other may be based on a cell identification and/or GPS information. The operator service may already (i.e. beforehand) be aware of the user terminals' WLAN capability (e.g. which 802.11 modes are supported), or they may be asked for it every time by the service. RCS may be informed by the clients, along with other capability information, for example, whether the clients are capable of instant messaging. If UE1 and UE2 have WLAN and they are close to each other, a WLAN information request 3-4 is transmitted from RCS to UE2, wherein UE2 responds 3-5 by transmitting a WLAN information response 3-5. The message 3-4 includes a request whether UE2 has WLAN available for ad-hoc communication and/or a request for UE2's MAC address. The message 3-5 includes a response such as "WLAN possible with 802.11g, my MAC address is: bb:bb:...". Then RCS transmits a WLAN ad-hoc parameters message 3-6 to UE1 including information such as
"ad-hoc possible, create WLAN ad-hoc with parameters:
- at least 802.11g radio
- name: "xyz"
- encryption: WEP, 128-bit ASCII
key: <13 chars long key>
user UE2 has MAC bb:bb:..."

The name "xyz" is given by the operator service and it may be the same every time for UE1. The 13 chars long key is given by the operator service and it is changed every time for UE1. UE1 responds 3-7 by transmitting ad-hoc information such as "ad-hoc created, my MAC address is aa:aa:..." to RCS. Before or during transmitting message 3-7, UE1 activates the ad-hoc network (e.g. WLAN) with the received parameters. The purpose of the response 3-7 is to make the verification of the user stronger. Then RCS transmits 3-8 a search WLAN ad-hoc request to UE2. The message 3-8 may include a request to use a WLAN ad-hoc connection and to start searching for ad-hoc name "xyz" and information on the encryption key (which may be the same as that given to UE1) and the UE's MAC address (aa:aa:...). UE2 responds by transmitting a search WLAN ad-hoc response including information such as "xyz" found with MAC aa:aa:.... After that UE2 is able to try to connect directly to UE1 by transmitting a connection request message 3-10 directly to the "xyz" ad-hoc name of UE1. After that an ad-hoc connection may be established 3-11 between UE1 and UE2. In the message 3-12 file transfer from UE1 to UE2 is carried out via the ad-hoc WLAN.

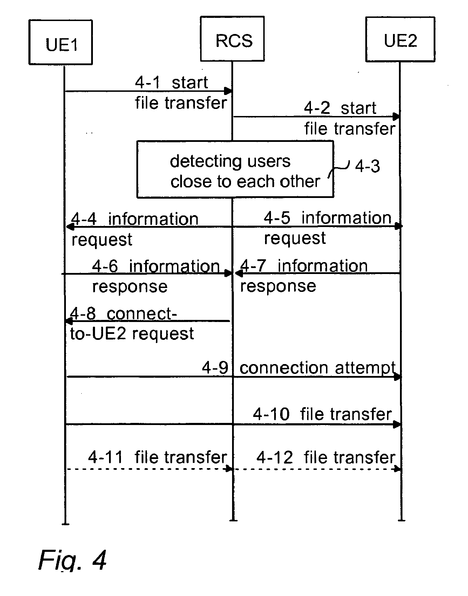

Figure 4 illustrates signalling according to the second embodiment of the present solution, wherein the users are logged in to the operator service (e.g. RCS) via the same IP subnet. Referring to Figure 4, the user of the first user terminal UE1 wishes to start file transmission (or some other suitable communication service) to a second user terminal UE2. This means that a communication request such as a start file transfer message 4-1, 4-2 is transmitted from UE1 via RCS to UE2. According to the present solution, on the basis of the messages 4-1 and 4-2, it is checked and detected 4-3 in RCS whether UE1 and UE2 are "close" to each other (as described above). The detection of whether the user terminals are close to each other may be based e.g. on IP information (e.g. laptops may not have mobile network connectivity). If UE1 and UE2 are close to each other, an information request 4-4, 4-5 is transmitted from RCS to UE1 and UE2. The request 4-4, 4-5 may include a request for the MAC address and for the IP address (if behind NAT (network access translator) and public IP seen by the service operator) of UE2. In the message 4-6 UE1 transmits its MAC address and IP address to RCS, and in the message 4-7 UE2 transmits its MAC address and IP address to RCS. By transmitting a connect-to-UE2 request 4-8 to UE1, RCS requests UE1 to try to connect to the IP address of UE2. After that UE1 is able to try to connect directly to UE2 by transmitting an attempt to connect to <IP of UE2> message 4-9 directly to UE2. If the attempt succeeds, a file transfer 4-10 from UE1 to UE2 may be carried out via the ad-hoc WLAN. If the attempt fails, the file transfer 4-11, 4-12 from UE1 to UE2 is carried out via RCS.

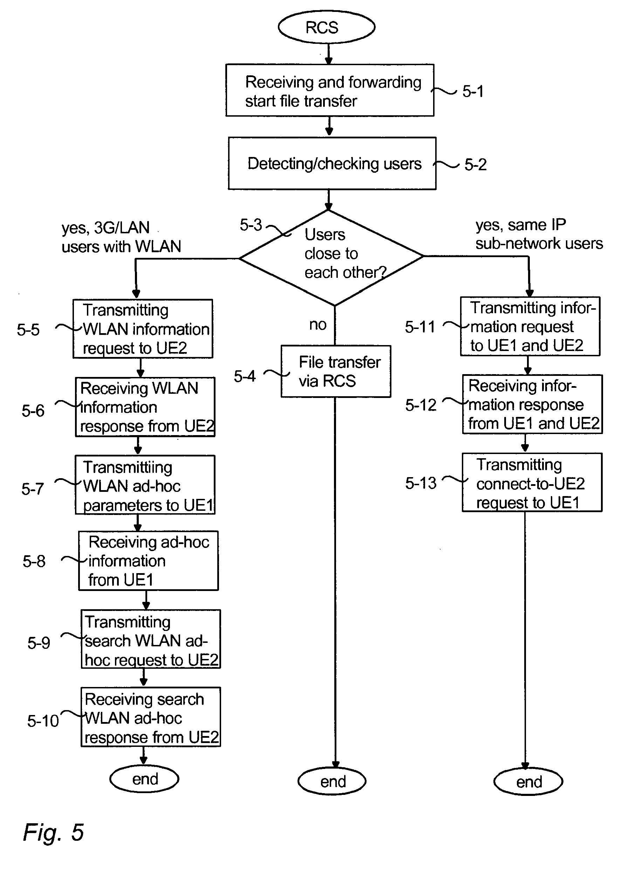

Figure 5 is a flow chart illustrating the functioning of an operator service environment, such as a rich communication suite RCS environment, according to an embodiment of the present solution. Referring to Figure 5, a start file transfer message is received 5-1 in RCS from UE1 and forwarded 5-1 to UE2, meaning that a user of the first user terminal UE1 wishes to start file transmission (or some other suitable communication service) to a second user terminal UE2. According to the present solution, on the basis of the message received and forwarded in step 5-1, it is checked and detected 5-2 in RCS whether UE1 and UE2 are 1) WLAN-capable (or some other suitable short-range communication) users (first embodiment) that are logged in to the operator service (e.g. RCS) via e.g. LAN and/or 3G (but not via WLAN, in order to have WLAN free for ad-hoc usage), or 2) users that are logged in to the operator service (e.g. RCS) via the same IP subnet (second embodiment). It is also checked and detected 5-2, 5-3 in RCS whether UE1 and UE2 are users that are "close" to each other (as described above). If the users are WLAN-capable users that are logged in to the operator service (e.g. RCS) via e.g. LAN and/or 3G, the detection of whether the user terminals have WLAN may be based e.g. on file transfer capability information. The detection of whether the user terminals are close to each other may be based on cell identification and/or GPS information. The operator service may already (i.e. beforehand) be aware of the user terminals' WLAN capability (e.g. which 802.11 modes are supported), or they may be asked for it every time by the service. RCS may be informed by the clients along with other capability information (e.g. that they are capable of instant messaging). If the users are logged in to the operator service (e.g. RCS) via the same IP subnet, the detection of whether the user terminals are close to each other may be based e.g. on IP information. If it is detected that neither of 1) and 2) applies, and/or UE1 and UE2 are not close to each other, the file transfer between UE1 and UE2 may be carried out 5-4 via RCS (i.e. not by using an ad-hoc connection between UE1 and UE2). If UE1 and UE2 are close to each other and they are logged in to the operator service (e.g. RCS) via e.g. LAN and/or 3G, and have WLAN, a WLAN information request is transmitted 5-5 from RCS to UE2. In step 5-6, a WLAN information response is received from UE2. The request message includes a request whether UE2 has WLAN available for ad-hoc communication and/or a request for UE2's MAC address. The response message includes a response such as "WLAN possible with 802.11g, my MAC address is: bb:bb:...". Then RCS transmits 5-7 WLAN ad-hoc parameters to UE1, including information such as
"ad-hoc possible, create WLAN ad-hoc with parameters:
- at least 802.11g radio
- name: "xyz"
- encryption: WEP, 128-bit ASCII
key: <13 chars long key>
user UE2 has MAC bb:bb:..."

The name "xyz" is given by the operator service and it may be the same every time for UE1. The 13 chars long key is given by the operator service and it is changed every time for UE1. A response is received 5-8 from UE1, including ad-hoc information such as "ad-hoc created, my MAC address is aa:aa:...". The purpose of the response is to make the verification of the user stronger. Then RCS transmits 5-9 a search WLAN ad-hoc request to UE2. The message 5-9 may include a request to use a WLAN ad-hoc connection and to start searching for ad-hoc name "xyz" and information on the encryption key (which may be the same as that given to UE1) and the UE's MAC address (aa:aa:...). In step 5-10, a search WLAN ad-hoc response is received from UE2, including information such as "xyz" found with MAC aa:aa:.... If UE1 and UE2 are close to each other and logged in to the operator service (e.g. RCS) via the same IP subnet, an information request is transmitted 5-11 from RCS to UE1 and UE2. The request may include a request for the MAC address and for the IP address (if behind NAT and public IP seen by the service operator) of UE2. In step 5-12, an information response is received from UE1, including UE1's MAC address and IP address. Further in step 5-12, an information response is received from UE2, including UE2's MAC address and IP address. By transmitting, in step 5-13, a connect-to-UE2 request to UE1, RCS requests UE1 to try to connect to the IP address of UE2. If the attempt fails, the file transfer from UE1 to UE2 is carried out 5-4 via RCS.

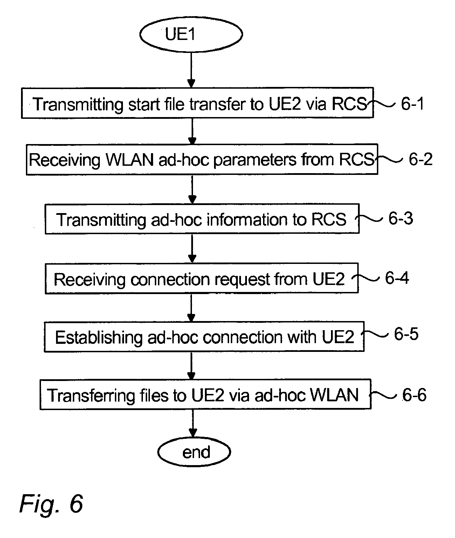

Figure 6 is a flow chart illustrating the functioning of a first user terminal UE1 according to the first embodiment of the present solution, wherein the users are logged in to the operator service (e.g. RCS) via e.g. LAN and/or 3G. Referring to Figure 6, the user of the first user terminal UE1 wishes to start file transmission (or some other suitable communication service) to a second user terminal UE2. This means that a start file transfer message is transmitted 6-1 from UE1 via RCS to UE2. In step 6-2, WLAN ad-hoc parameters are received from RCS, including information such as
"ad-hoc possible, create WLAN ad-hoc with parameters:
- at least 802.11g radio
- name: "xyz"
- encryption: WEP, 128-bit ASCII
key: <13 chars long key>
user UE2 has MAC bb:bb:..."

The name "xyz" is given by the operator service and it may be the same every time for UE1. The 13 chars long key is given by the operator service and it is changed every time for UE1. UE1 responds 6-3 by transmitting ad-hoc information such as "ad-hoc created, my MAC address is aa:aa:..." to RCS. Before or during transmitting message 6-3, UE1 activates the ad-hoc network (e.g. WLAN) with the received parameters. The purpose of the response 6-3 is to make the verification of the user stronger. After that a connection request to the "xyz" ad-hoc name is received 6-4 from UE2. After that an ad-hoc connection may be established 6-5 between UE1 and UE2. In step 6-6, file transfer from UE1 to UE2 is carried out via the established ad-hoc WLAN connection.

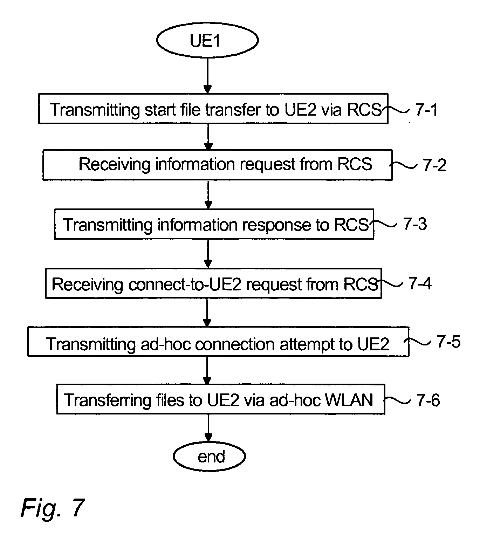

Figure 7 is a flow chart illustrating the functioning of a first user terminal UE1 according to the second embodiment of the present solution, wherein the users are logged in to the operator service (e.g. RCS) via the same IP subnet. Referring to Figure 7, the user of the first user terminal UE1 wishes to start file transmission (or some other suitable communication service) to a second user terminal UE2. This means that a start file transfer message is transmitted 7-1 from UE1 via RCS to UE2. In step 7-2, an information request is received 7-2 from RCS. The request may include a request for the MAC address and for the IP address (if behind NAT and public IP seen by the service operator) of UE2. In step 7-3, UE1 transmits its MAC address and IP address to RCS. In step 7-4, a connect-to-UE2 request message is received from RCS, where RCS requests UE1 to try to connect to the IP address of UE2. After that UE1 is able to try to connect directly to UE2 by transmitting 7-5 an attempt to connect to <IP of UE2> message directly to UE2. If the attempt succeeds, a file transfer 7-6 from UE1 to UE2 may be carried out via the ad-hoc WLAN. If the attempt fails, the file transfer from UE1 to UE2 is carried out via RCS (not shown in Figure 7).

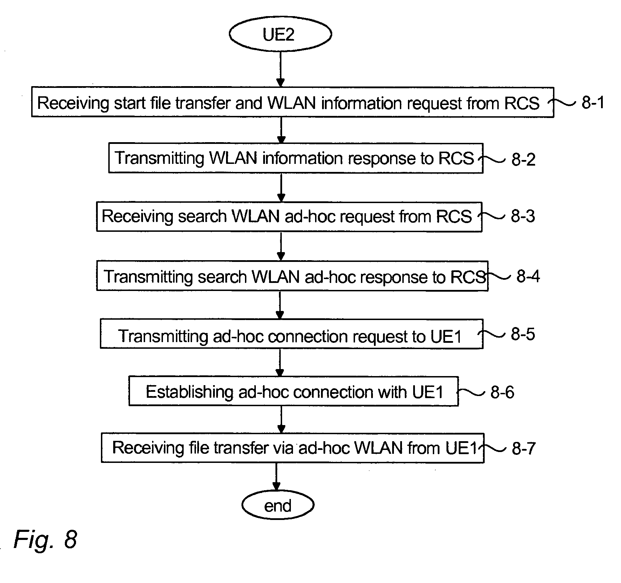

Figure 8 is a flow chart illustrating the functioning of a second user terminal UE2 according to the first embodiment of the present solution, wherein the users are logged in to the operator service (e.g. RCS) via e.g. LAN and/or 3G. Referring to Figure 8, a start file transfer message is received 8-1 from RCS, indicating that the first user terminal UE1 wishes to start file transmission (or some other suitable communication service) to a second user terminal UE2. Further, in step 8-1, UE2 receives a WLAN information request from RCS. UE2 responds 8-2 by transmitting a WLAN information response to RCS. The request message received in step 8-1 includes a request whether UE2 has WLAN available for an ad-hoc connection and/or a request for UE2's MAC address. The response message transmitted in step 8-2 includes a response such as "WLAN possible with 802.11g, my MAC address is: bb:bb:...". Then a search WLAN ad-hoc request is received 8-3 from RCS, including a request to use the WLAN ad-hoc connection and to start searching for the ad-hoc name "xyz" and information on the encryption key (which may be the same as given to UE1) and the UE's MAC address (aa:aa:...). UE2 responds 8-4 by transmitting a search WLAN ad-hoc response including information such as "xyz" found with MAC aa:aa:.... After that UE2 is able to try to connect directly to UE1 by transmitting 8-5 a connection request message directly to the "xyz" ad-hoc name of UE1. After that an ad-hoc connection may be established 8-6 between UE1 and UE2. In step 8-7, a file transfer from UE1 is received via the ad-hoc WLAN.

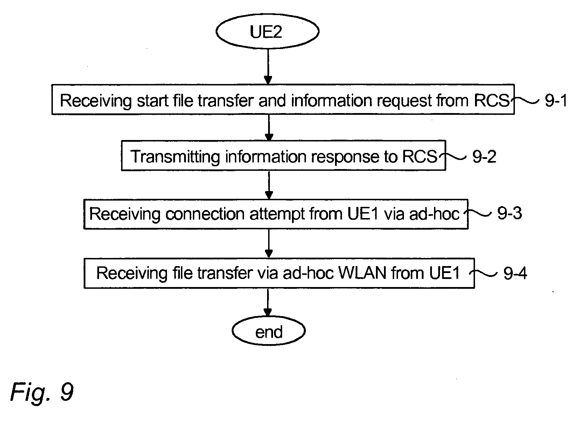

Figure 9 is a flow chart illustrating the functioning of a second user terminal UE2 according to the second embodiment of the present solution, wherein the users are logged in to the operator service (e.g. RCS) via the same IP subnet. Referring to Figure 9, a start file transfer message is received 9-1 from RCS, indicating that the first user terminal UE1 wishes to start file transmission (or some other suitable communication service) to a second user terminal UE2. Further, in step 9-1, UE2 receives an information request from RCS, including a request for the MAC address and for the IP address (if behind NAT and public IP seen by the service operator) of UE2. In step 9-2, UE2 transmits its MAC address and IP address to RCS. After that UE2 may receive 9-3 a connect to <IP of UE2> message 9-3 directly from UE1. In step 9-4, a file transfer from UE1 may be received via the ad-hoc WLAN. If the attempt to connect to <IP of UE2> fails, the file transfer from UE1 is received via RCS (not shown in Figure 9).

According to an embodiment, an ad-hoc name for an ad-hoc connection is defined by the user when the ad-hoc network is formed.

According to another embodiment, the ad-hoc name is defined automatically by the system when the ad-hoc connection is formed.

According to yet another embodiment, near-field communication (NFC) technique is utilized when transmitting WLAN parameters. This means that the user terminals are brought into physical contact with each other, wherein the clients generate a mutual ad-hoc WLAN connection and the related parameters that are mutually transmitted by using NFC. The clients notify RCS on the NFC ad-hoc connection, wherein RCS does not necessarily have to check whether the terminals are close to each other (as in NFC they obviously are).

It should be noted that the system according to the present solution may be arranged to implement both of the first and the second embodiments or only one of them. It should also be noted that the first and second user terminals may be located in the same communications network, or in different networks (provided that the different networks are close to each other (i.e. such that the short-range communication network available)).

The items and steps shown in the figures are simplified and only intend to describe the idea of the present solution. The steps/points, signaling messages and related functions described above in Figures 1 to 9 are in no absolute chronological order, and some of the steps/points may be performed simultaneously or in an order different from the given one. Other functions may also be executed between the steps/points or within the steps/points and other signaling messages sent between the illustrated messages. Some of the steps/points or part of the steps/points can also be left out or integrated together or replaced by a corresponding step/point or part of the step/point. The apparatus operations illustrate a procedure that may be implemented in one or more physical or logical entities. The signaling messages are only exemplary and may even comprise several separate messages for transmitting the same information. The messages serve only as examples and they may contain only some of the information mentioned above. In addition, the messages may also contain other information, and the titles may deviate from those given above. Instead of or in addition to a home network node and/or a visited network node, the above-described operations may be performed in any other element of a communications system.

In addition to prior art means, a system or system network nodes that implement the functionality of the present solution comprise means for establishing an ad-hoc connection. Existing network nodes and user terminals comprise processors and memory that may be utilized in the operations of the present solution. Any changes necessary in implementing the present solution may be carried out using supplements or updates of software routines and/or routines included in application-specific integrated circuits (ASIC) and/or programmable circuits, such as EPLDs (electrically programmable logic device) or FPGAs (field programmable gate array).

It will be obvious to a person skilled in the art that, as the technology advances, the inventive concept may be implemented in various ways. The invention and its embodiments are not limited to the examples described above but may vary within the scope of the claims.

## Claims

1. A method of providing a communications service to a user terminal in a communications system (S), the system (S) comprising
an operator network (IMS) including an operator service environment unit (RCS),
at least one communications network (PLMN, LAN, IP sub),
a first user terminal (UE1) connected to a first communications network (PLMN, IP sub) or a second communications network (LAN, IP sub), and
a second terminal (UE2) connected to the first communications network (PLMN, IP sub) or the second communications network (LAN, IP sub),
the method comprising
receiving (5-1), in the operator service environment unit (RCS), a communication request (3-1, 4-1) from the first terminal (UE1), the communication request indicating that the first terminal (UE1) wishes to start an enhanced communication with the second terminal (UE2), and
forwarding (5-1) the communication request (3-2, 4-2) from the operator service environment unit (RCS) to the second terminal (UE2),
obtaining (3-1, 3-4, 3-5, 3-7, 3-9, 4-4, 4-5, 4-6, 4-7) information related to a short-range communication (WLAN) capability of the first terminal (UE1) and the second terminal (UE2);
wherein, if the first terminal (UE1) and the second terminal (UE2) are capable of using an appropriate short-range communication medium (WLAN), the method comprises
providing (3-4, 3-6, 3-8, 4-5, 5-7) information on the short-range communication capability of the first terminal to the second terminal and/or vice versa;
requesting (3-8, 4-8, 5-9, 5-13) the first or the second terminal (UE1, UE2) to establish, on the basis of the provided information, a mutual ad-hoc connection between the first and the second terminals (UE1, UE2), wherein the ad-hoc connection is implemented by utilizing the short-range communication medium (WLAN);
utilizing (3-10, 3-11, 3-12, 4-9, 4-10, 6-6, 7-6, 8-7, 9-4) the ad-hoc connection for the enhanced communication between the first and the second terminals (UE1, UE2); and
performing a mutual authentication of the first and the second terminals (UE1, UE2) such that an exchange of secure encryption keys related to the ad-hoc connection between the first and the second terminals (UE1, UE2), is carried out via the operator service environment unit (RCS),
**characterized in that** required WLAN ad-hoc parameters for the ad-hoc connection are transmitted by utilizing near-field communication NFC technique by means of a physical contact between the first and the second terminals (UE1, UE2).

2. A method according to claim 1,**characterized by** providing, to the first terminal (UE1), information on an ad-hoc name of the second terminal (UE2).

3. A method according to claim 1 or 2, **characterized by** transmitting, from the operator service environment unit (RCS) to the terminal (UE1, UE2), an ad-hoc encryption key related to the ad-hoc connection.

4. A method according to any of claims 1, 2 or 3, **characterized in that** a checking, whether the first terminal (UE1) and the second terminal (UE2) are located close to each other, is carried out on the basis of cell identification information, global positioning system information, and/or Internet protocol address information of the terminal (UE1, UE2).

5. A method according to any of claims 1 to 4, **characterized in that** the enhanced communication is carried out by utilizing a direct mode of the short-range communication medium (WLAN).

6. A method according to any of claims 1 to 5, **characterized in that** the enhanced communication comprises at least one of a file transfer service, an enriched voice over Internet protocol VoIP service, and an instant messaging service.

7. A method according to any of claims 1 to 6, **characterized in that** if the establishing of the mutual ad-hoc connection between the first and the second terminals (UE1, UE2) fails, the method comprises utilizing (4-11, 4-12) the operator service environment unit (RCS) for the enhanced communication between the first and the second terminals (UE1, UE2).

8. A method according to any of claims 1 to 7, **characterized in that** the at least one communications network comprises a mobile communications network (PLMN).

9. A method according to any of claims 1 to 8, **characterized in that** the at least one communications network comprises a local area network (LAN).

10. A method according to any of claims 1 to 7, **characterized in that** the at least one communications network comprises an Internet protocol sub-network (IP sub).

11. A method according to any of claims 1 to 10, **characterized in that** the short-range communication medium (WLAN) comprises a wireless local area network WLAN.

12. A method according to any of claims 1 to 11, **characterized in that** the information on the short-range communication capability comprises information on the wireless local area network (WLAN) capability of the terminal (UE1, UE2).

13. A method according to any of claims 1 to 11, **characterized in that** the method comprises notifying the operator service environment unit (RCS) on the established NFC ad-hoc connection.

14. A communications system (S) comprising
an operator network (IMS) including an operator service environment unit (RCS),
at least one communications network (PLMN, LAN, IP sub),
a first terminal (UE1) connected to a first communications network (PLMN, IP sub) or a second communications network (LAN, IP sub), and
a second terminal (UE2) connected to the first communications network (PLMN, IP sub) or the second communications network (LAN, IP sub),
the system being configured to
receive, in the operator service environment unit (RCS), a communication request from the first terminal (UE1), the communication request indicating that the first terminal (UE1) wishes to start enhanced communication with the second terminal (UE2), and
forward the communication request from the operator service environment unit (RCS) to the second terminal (UE2),
obtain information related to a short-range communication (WLAN) capability of the first terminal (UE1) and the second terminal (UE2);
wherein, if the first terminal (UE1) and the second terminal (UE2) are capable of using an appropriate short-range communication medium (WLAN), the system is configured to
provide information on the short-range communication capability of the first terminal to the second terminal and/or vice versa;
request the first or the second terminal (UE1, UE2) to establish, on the basis of the provided information, a mutual ad-hoc connection between the first and the second terminals (UE1, UE2), wherein the ad-hoc connection is implemented by utilizing the short-range communication medium (WLAN);
utilize the ad-hoc connection for the enhanced communication between the first and the second terminals (UE1, UE2); and
perform a mutual authentication of the first and the second terminals (UE1, UE2) such that an exchange of secure encryption keys related to the ad-hoc connection between the first and the second terminals (UE1, UE2), is carried out via the operator service environment unit (RCS),
**characterized in that** the system is configured to transmit required WLAN ad-hoc parameters for the ad-hoc connection by utilizing near-field communication NFC technique by means of a physical contact between the first and the second terminals (UE1, UE2).

15. A system according to claim 14, **characterized in that** it is configured to carry out the enhanced communication by utilizing a direct mode of the short-range communication medium (WLAN).

16. A system according to claim 14 or 15, **characterized in that** the enhanced communication comprises at least one of a file transfer service, an enriched voice over Internet protocol VoIP service, and an instant messaging service.

17. A system according to claim 14, 15 or 16, **characterized in that** if the establishment of the mutual ad-hoc connection between the first and the second terminals (UE1, UE2) fails, the system is configured to utilize the operator service environment unit (RCS) for the enhanced communication between the first and the second terminals (UE1, UE2).

18. A system according to any of claims 14 to 17, **characterized in that** the at least one communications network comprises a mobile communications network (PLMN).

19. A system according to any of claims 14 to 18, **characterized in that** the at least one communications network comprises a local area network (LAN).

20. A system according to any of claims 14 to 17, **characterized in that** the at least one communications network comprises an Internet protocol sub-network (IP sub).

21. A system according to any of claims 14 to 20, **characterized in that** the short-range communication medium (WLAN) comprises a wireless local area network WLAN.

22. A system according to any of claims 14 to 21, **characterized in that** the system is configured to notify the operator service environment unit (RCS) on the established NFC ad-hoc connection.

23. A first terminal (UE1) for a communications system (S) comprising
an operator network (IMS) including an operator service environment unit (RCS), and
at least one communications network (PLMN, LAN, IP sub),
wherein the first terminal (UE1) is connected to a first communications network (PLMN, IP sub) or a second communications network (LAN, IP sub), the first terminal (UE1) being configured to
transmit, to the operator service environment unit (RCS), a communication request, the communication request indicating that the first terminal (UE1) wishes to start enhanced communication with a second terminal (UE2), wherein the second terminal (UE2) is connected to the first communications network (PLMN, IP sub) or the second communications network (LAN, IP sub),
provide information related to a short-range communication (WLAN) capability of the first terminal (UE1);
receive information on the short-range communication capability of the second terminal;
establish, on the basis of said information, a mutual ad-hoc connection between the first and the second terminals (UE1, UE2), wherein the ad-hoc connection is implemented by utilizing an appropriate short-range communication medium (WLAN);
utilize the ad-hoc connection for the enhanced communication between the first and the second terminals (UE1, UE2); and
perform a mutual authentication of the first terminal (UE1), such that an exchange of secure encryption keys related to the ad-hoc connection between the first and the second terminals (UE1, UE2), is carried out via the operator service environment unit (RCS),
**characterized in that** the first terminal (UE1) is configured to transmit required WLAN ad-hoc parameters for the ad-hoc connection by utilizing near-field communication NFC technique by means of a physical contact between the first and the second terminals (UE1, UE2).

24. A first terminal according to claim 23, **characterized in that** it is configured to receive information on an ad-hoc name of the second terminal (UE2).

25. A second terminal (UE2) for a communications system (S), the system comprising
an operator network (IMS) including an operator service environment unit (RCS), and
at least one communications network (PLMN, LAN, IP sub), wherein the second terminal (UE2) is connected to a first communications network (PLMN, IP sub) or a second communications network (LAN, IP sub), the second terminal (UE2) being configured to
receive, from the operator service environment unit (RCS), a communication request indicating that a first terminal (UE1) wishes to start enhanced communication with the second terminal (UE2), wherein the first terminal (UE1) is connected to the first communications network (PLMN, IP sub) or the second communications network (LAN, IP sub),
receive information related to a short-range communication (WLAN) capability of the first terminal (UE1);
provide information on the short-range communication capability of the second terminal;
establish, on the basis of said information, a mutual ad-hoc connection between the first and the second terminals (UE1, UE2), wherein the ad-hoc connection is implemented by utilizing the short-range communication medium (WLAN);
utilize the ad-hoc connection for the enhanced communication between the first and the second terminals (UE1, UE2); and
perform a mutual authentication of the second terminal (UE2), such that an exchange of secure encryption keys related to the ad-hoc connection between the first and the second terminals (UE1, UE2), is carried out via the operator service environment unit (RCS),
**characterized in that** the second terminal (UE2) is configured to transmit required WLAN ad-hoc parameters for the ad-hoc connection by utilizing near-field communication NFC technique by means of a physical contact between the first and the second terminals (UE1, UE2).

26. A terminal according to claim 25, **characterized in that** it is configured to receive, from the operator service environment unit (RCS), an ad-hoc encryption key related to the ad-hoc connection.

27. A terminal according to claim 25 or 26, **characterized in that** it is configured to carry out the enhanced communication by utilizing a direct mode of the short-range communication medium (WLAN).

28. A terminal according to claim 25, 26 or 27, **characterized in that** the enhanced communication comprises at least one of a file transfer service, an enriched voice over Internet protocol VoIP service, and an instant messaging service.

29. A terminal according to any of claims 25 to 28, **characterized in that** if the establishing of the mutual ad-hoc connection between the first and the second terminals (UE1, UE2) fails, it is configured to utilize the operator service environment unit (RCS) for the enhanced communication between the first and the second terminal (UE1, UE2).

30. A computer program product comprising program code means, **characterized in that** the program code means are adapted to perform the method steps according to any of claims 1 to 13 when the program is run on a computer or on a processor.

## Patentansprüche

1. Verfahren zum Bereitstellen eines Kommunikationsdienstes für ein Benutzer-Endgerät in einem Kommunikationssystem (S), wobei das System umfasst:
ein Betreiber-Netzwerk (IMS), das eine Betreiber-Dienstumgebungseinheit (RCS) einschließt,
wenigstens ein Kommunikations-Netzwerk (PLMN, LAN, IP sub),
ein erstes Benutzer-Endgerät (UE1), das mit einem ersten Kommunikations-Netzwerk (PLMN, IP sub) oder einem zweiten Kommunikations-Netzwerk (LAN, IP sub) verbunden ist, und
ein zweites Endgerät (UE2), das mit dem ersten Kommunikations-Netzwerk (PLMN, IP sub) oder dem zweiten Kommunikations-Netzwerk (LAN, IP sub) verbunden ist,
wobei das Verfahren umfasst:
Empfangen (5-1) einer Kommunikations-Anforderung (3-1, 4-1) von dem ersten Endgerät (UE1) in der Betreiber-Dienstumgebungseinheit (RCS), wobei die Kommunikations-Anforderung anzeigt, dass das erste Endgerät (UE1) eine erweiterte Kommunikation mit dem zweiten Endgerät (UE2) starten möchte, und
Weiterleiten (5-1) der Kommunikations-Anforderung (3-2, 4-2) von der Betreiber-Dienstumgebungseinheit (RCS) zu dem zweiten Endgerät (UE2),
Erfassen (3-1, 3-4, 3-5, 3-7, 3-9, 4-4, 4-5, 4-6, 4-7) von Informationen bezüglich einer Fähigkeit des ersten Endgerätes (UE1) und des zweiten Endgerätes (UE2) zur Kurzstrecken-Kommunikation (WLAN);
wobei, wenn das erste Endgerät (UE1) und das zweite Endgerät (UE2) in der Lage sind, ein entsprechendes Kurzstrecken-Kommunikationsmedium (WLAN) zu verwenden, das Verfahren umfasst:
Bereitstellen (3-4, 3-6, 3-8, 4-5, 5-7) von Informationen über die Fähigkeit des ersten Endgerätes zur Kurzstrecken-Kommunikation für das zweite Endgerät und/oder umgekehrt;
Auffordern (3-8, 4-8, 5-9, 5-13) des ersten oder des zweiten Endgerätes (UE1, UE2) auf Basis der bereitgestellten Informationen eine wechselseitige Ad-hoc-Verbindung zwischen dem ersten und dem zweiten Endgerät (UE1, UE2) einzurichten, wobei die Ad-hoc-Verbindung unter Nutzung des Kurzstrecken-Kommunikationsmediums (WLAN) implementiert wird;
Nutzen (3-10, 3-11, 3-12, 4-9, 4-10, 6-6, 7-6, 8-7, 9-4) der Ad-hoc-Verbindung für die erweiterte Kommunikation zwischen dem ersten und dem zweiten Endgerät (UE1, UE2); und
Durchführen einer wechselseitigen Authentifizierung des ersten und des zweiten Endgerätes (UE1, UE2), so dass ein Austausch sicherer Verschlüsselungsschlüssel bezüglich der Ad-hoc-Verbindung zwischen dem ersten und dem zweiten Endgerät (UE1, UE2) über die Betreiber-Dienstumgebungseinheit (RCS) ausgeführt wird,
**dadurch gekennzeichnet, dass** die erforderlichen WLAN-Ad-hoc-Parameter für die Ad-hoc-Verbindung unter Nutzung von NFC-Technik (near-field communication technique) mittels eines physischen Kontakts zwischen dem ersten und dem zweiten Endgerät (UE1, UE2) übertragen werden.

2. Verfahren nach Anspruch 1, **dadurch gekennzeichnet, dass** dem ersten Endgerät (UE1) eine Information über einen Ad-hoc-Namen des zweiten Endgerätes (UE2) bereitgestellt wird.

3. Verfahren nach Anspruch 1 oder 2, **dadurch gekennzeichnet, dass** von der Betreiber-Dienstumgebungseinheit (RCS) ein Ad-hoc-Verschlüsselungsschlüssel bezüglich der Ad-hoc-Verbindung zu dem Endgerät (UE1, UE2) übertragen wird.

4. Verfahren nach einem der Ansprüche 1, 2 oder 3, **dadurch gekennzeichnet, dass** eine Prüfung dahingehend, ob sich das erste Endgerät (UE1) und das zweiten Endgerät (UE2) nahe beieinander befinden, auf Basis von CI-Informationen (cell identification information), GPS-Informationen (global positioning system information) und/oder IP-Adressinformationen (Internet Protocol address information) des Endgerätes (UE1, UE2) ausgeführt wird.

5. Verfahren nach einem der Ansprüche 1 bis 4, **dadurch gekennzeichnet, dass** die erweiterte Kommunikation unter Verwendung eines Direktmodus des Kurzstrecken-Kommunikationsmediums (WLAN) ausgeführt wird.

6. Verfahren nach einem der Ansprüche 1 bis 5, **dadurch gekennzeichnet, dass** die erweiterte Kommunikation wenigstens einen Dateitransferdienst, einen erweiterten VoIP-Dienst (enriched Voice over Internet Protocol service) oder/und einen Instant-Messaging-Dienst umfasst.

7. Verfahren nach einem der Ansprüche 1 bis 6, **dadurch gekennzeichnet, dass**, wenn die Einrichtung der wechselseitigen Ad-hoc-Verbindung zwischen dem ersten und dem zweiten Endgerät (UE1, UE2) fehlschlägt, das Verfahren umfasst, dass die Betreiber-Dienstumgebungseinheit (RCS) für die erweiterte Kommunikation zwischen dem ersten und dem zweiten Endgerät (UE1, UE2) genutzt wird (4-11, 4-12).

8. Verfahren nach einem der Ansprüche 1 bis 7, **dadurch gekennzeichnet, dass** das wenigstens eine Kommunikations-Netzwerk ein Mobil-Kommunikations-Netzwerk (PLMN) umfasst.

9. Verfahren nach einem der Ansprüche 1 bis 8, **dadurch gekennzeichnet, dass** das wenigstens eine Kommunikations-Netzwerk ein LAN-Netzwerk (local area network) umfasst.

10. Verfahren nach einem der Ansprüche 1 bis 7, **dadurch gekennzeichnet, dass** das wenigstens eine Kommunikations-Netzwerk ein IP-Sub-Netzwerk (Internet Protocol sub network) umfasst.

11. Verfahren nach einem der Ansprüche 1 bis 10, **dadurch gekennzeichnet, dass** das Kurzstrecken-Kommunikationsmedium (WLAN) ein WLAN-Netzwerk (wireless local area network) umfasst.

12. Verfahren nach einem der Ansprüche 1 bis 11, **dadurch gekennzeichnet, dass** die Information über die Kurzstrecken-Kommunikationsfähigkeit eine Information über die WLAN-Fähigkeit des Endgerätes (UE1, UE2) umfasst.

13. Verfahren nach einem der Ansprüche 1 bis 11, **dadurch gekennzeichnet, dass** das Verfahren umfasst, dass die Betreiber-Dienstumgebungseinheit (RCS) über die eingerichtete NFC-Ad-hoc-Verbindung informiert wird.

14. Kommunikationssystem (S), das umfasst:
ein Betreiber-Netzwerk (IMS), das eine Betreiber-Dienstumgebungseinheit einschließt,
wenigstens ein Kommunikations-Netzwerk (PLMN, LAN, IP sub),
ein erstes Endgerät (UE1), das mit einem ersten Kommunikations-Netzwerk (PLMN, IP sub) oder einem zweiten Kommunikations-Netzwerk (LAN, IP sub) verbunden ist, und
ein zweites Endgerät (UE2), das mit dem ersten Kommunikations-Netzwerk (PLMN, IP sub) oder dem zweiten Kommunikations-Netzwerk (LAN, IP sub) verbunden ist,
wobei das System so konfiguriert ist, dass es:
in der Betreiber-Dienstumgebungseinheit (RCS) eine Kommunikations-Anforderung von dem ersten Endgerät (UE1) empfängt, wobei die Kommunikations-Anforderung anzeigt, dass das erste Endgerät (UE1) erweiterte Kommunikation mit dem zweiten Endgerät (UE2) starten möchte, und
die Kommunikations-Anforderung von der Betreiber-Dienstumgebungseinheit (RCS) zu dem zweiten Endgerät (UE2) weiterleitet,
Informationen bezüglich einer Fähigkeit des ersten Endgerätes (UE1) und des zweiten Endgerätes (UE2) zur Kurzstrecken-Kommunikation (WLAN) erfasst;
und das System so konfiguriert ist, dass es, wenn das erste Endgerät (UE1) und das zweite Endgerät (UE2) in der Lage sind, ein entsprechendes Kurzstrecken-Kommunikationsmedium (WLAN) zu verwenden:
dem zweiten Endgerät Informationen über die Fähigkeit des ersten Endgerätes zur Kurzstrecken-Kommunikation bereitstellt und/oder umgekehrt;
das erste oder das zweite Endgerät (UE1, UE2) auffordert, auf Basis der bereitgestellten Informationen eine wechselseitige Ad-hoc-Verbindung zwischen dem ersten und dem zweiten Endgerät (UE1, UE2) einzurichten, wobei die Ad-hoc-Verbindung unter Nutzung des Kurzstrecken-Kommunikationsmediums (WLAN) implementiert wird;
die Ad-hoc-Verbindung für die erweiterte Kommunikation zwischen dem ersten und dem zweiten Endgerät (UE1, UE2) nutzt; und
eine wechselseitige Authentifizierung des ersten und des zweiten Endgerätes (UE1, UE2) so durchführt, dass ein Austausch sicherer Verschlüsselungsschlüssel bezüglich der Ad-hoc-Verbindung zwischen dem ersten und dem zweiten Endgerät (UE1, UE2) über die Betreiber-Dienstumgebungseinheit (RCS) ausgeführt wird,
**dadurch gekennzeichnet, dass** das System so konfiguriert ist, dass es die erforderlichen WLAN-Ad-hoc-Parameter für die Ad-hoc-Verbindung unter Nutzung von NFC-Technik (near-field communication technique) mittels eines physischen Kontakts zwischen dem ersten und dem zweiten Endgerät (UE1, UE2) überträgt.

15. System nach Anspruch 14, **dadurch gekennzeichnet, dass** es so konfiguriert ist, dass es die erweiterte Kommunikation unter Verwendung eines Direktmodus des Kurzstrecken-Kommunikationsmediums (WLAN) ausführt.

16. System nach Anspruch14 oder 15, **dadurch gekennzeichnet, dass** die erweiterte Kommunikation wenigstens einen Dateitransferdienst, einen erweiterten VoIP-Dienst (enriched Voice over Internet Protocol service) oder/und einen Instant-Messaging-Dienst umfasst.

17. System nach Anspruch 14, 15 oder 16, **dadurch gekennzeichnet, dass** das System so konfiguriert ist, dass es, wenn die Einrichtung der wechselseitigen Ad-hoc-Verbindung zwischen dem ersten und dem zweiten Endgerät (UE1, UE2) fehlschlägt, die Betreiber-Dienstumgebungseinheit (RCS) für die erweiterte Kommunikation zwischen dem ersten und dem zweiten Endgerät (UE1, UE2) nutzt.

18. System nach einem der Ansprüche 14 bis 17, **dadurch gekennzeichnet, dass** das wenigstens eine Kommunikations-Netzwerk ein Mobil-Kommunikations-Netzwerk (PLMN) umfasst.

19. System nach einem der Ansprüche 14 bis 18, **dadurch gekennzeichnet, dass** das wenigstens eine Kommunikations-Netzwerk ein LAN-Netzwerk (local area network) umfasst.

20. System nach einem der Ansprüche 14 bis 17, **dadurch gekennzeichnet, dass** das wenigstens eine Kommunikations-Netzwerk ein IP-Sub-Netzwerk (Internet Protocol sub network) umfasst.

21. System nach einem der Ansprüche 14 bis 20, **dadurch gekennzeichnet, dass** das Kurzstrecken-Kommunikationsmedium (WLAN) ein WLAN-Netzwerk (wireless local area network) umfasst.

22. System nach einem der Ansprüche 14 bis 21, **dadurch gekennzeichnet, dass** das System so konfiguriert ist, dass es die Betreiber-Dienstumgebungseinheit (RCS) über die eingerichtete NFC-Ad-hoc-Verbindung informiert.

23. Erstes Endgerät (UE1) für ein Kommunikationssystem (S), das umfasst:
ein Betreiber-Netzwerk (IMS), das eine Betreiber-Dienstumgebungseinheit (RCS) einschließt, und
wenigstens ein Kommunikations-Netzwerk (PLMN, LAN, IP sub),
wobei das erste Endgerät (UE1) mit einem ersten Kommunikations-Netzwerk (PLMN, IP sub) oder einem zweiten Kommunikations-Netzwerk (LAN, IP sub) verbunden ist, und das erste Endgerät (UE1) so konfiguriert ist, dass es:
eine Kommunikations-Anforderung zu der Betreiber-Dienstumgebungseinheit (RCS) sendet, wobei die Kommunikations-Anforderung anzeigt, dass das erste Endgerät (UE1) erweiterte Kommunikation mit einem zweiten Endgerät (UE2) starten möchte, und das zweite Endgerät (UE2) mit dem ersten Kommunikations-Netzwerk (PLMN, IP sub) oder dem zweiten Kommunikations-Netzwerk (LAN, IP sub) verbunden ist,
Informationen bezüglich einer Fähigkeit des ersten Endgerätes (UE1) zur Kurzstrecken-Kommunikation (WLAN) bereitstellt;
Informationen über die Fähigkeit des zweiten Endgerätes zur Kurzstrecken-Kommunikation empfängt;
auf Basis der Informationen eine wechselseitige Ad-hoc-Verbindung zwischen dem ersten und dem zweiten Endgerät (UE1, UE2) einrichtet, wobei die Ad-hoc-Verbindung unter Nutzung eines entsprechenden Kurzstrecken-Kommunikationsmediums (WLAN) implementiert wird;
die Ad-hoc-Verbindung für die erweiterte Kommunikation zwischen dem ersten und dem zweiten Endgerät (UE1, UE2) nutzt; und
eine wechselseitige Authentifizierung des ersten Endgerätes (UE1) so durchführt, dass ein Austausch sicherer Verschlüsselungsschlüssel bezüglich der Ad-hoc-Verbindung zwischen dem ersten und dem zweiten Endgerät (UE1, UE2) über die Betreiber-Dienstumgebungseinheit (RCS) ausgeführt wird,
**dadurch gekennzeichnet, dass** das erste Endgerät (UE1) so konfiguriert ist, dass es erforderliche WLAN-Ad-hoc-Parameter für die Ad-hoc-Verbindung unter Nutzung von NFC-Technik (near-field communication technique) mittels eines physischen Kontaktes zwischen dem ersten und dem zweiten Endgerät (UE1, UE2) sendet.

24. Erstes Endgerät nach Anspruch 23, **dadurch gekennzeichnet, dass** es so konfiguriert ist, dass eine Information über einen Ad-hoc-Namen des zweiten Endgerätes (UE2) empfängt.

25. Zweites Endgerät (UE2) für ein Kommunikationssystem (S), das umfasst:
ein Betreiber-Netzwerk (IMS), das eine Betreiber-Dienstumgebungseinheit (RCS) einschließt, und
wenigstens ein Kommunikations-Netzwerk (PLMN, LAN, IP sub),
wobei das zweite Endgerät (UE2) mit einem ersten Kommunikations-Netzwerk (PLMN, IP sub) oder einem zweiten Kommunikations-Netzwerk (LAN, IP sub) verbunden ist, und das zweite Endgerät (UE2) so konfiguriert ist, dass es:
eine Kommunikations-Anforderung von der Betreiber-Dienstumgebungseinheit (RCS) empfängt die anzeigt, dass ein erstes Endgerät (UE1) erweiterte Kommunikation mit einem zweiten Endgerät (UE2) starten möchte, und das erste Endgerät (UE1) mit dem ersten Kommunikations-Netzwerk (PLMN, IP sub) oder dem zweiten Kommunikations-Netzwerk (LAN, IP sub) verbunden ist,
Informationen bezüglich einer Fähigkeit des ersten Endgerätes (UE1) zur Kurzstrecken-Kommunikation (WLAN) empfängt;
Informationen über die Fähigkeit des zweiten Endgerätes zur Kurzstrecken-Kommunikation bereitstellt;
auf Basis der Informationen eine wechselseitige Ad-hoc-Verbindung zwischen dem ersten und dem zweiten Endgerät (UE1, UE2) einrichtet, wobei die Ad-hoc-Verbindung unter Nutzung des Kurzstrecken-Kommunikationsmediums (WLAN) implementiert wird;
die Ad-hoc-Verbindung für die erweiterte Kommunikation zwischen dem ersten und dem zweiten Endgerät (UE1, UE2) nutzt; und
eine wechselseitige Authentifizierung des zweiten Endgerätes (UE2) so durchführt, dass ein Austausch sicherer Verschlüsselungsschlüssel bezüglich der Ad-hoc-Verbindung zwischen dem ersten und dem zweiten Endgerät (UE1, UE2) über die Betreiber-Dienstumgebungseinheit (RCS) ausgeführt wird,
**dadurch gekennzeichnet, dass** das zweite Endgerät (UE2) so konfiguriert ist, dass es erforderliche WLAN-Ad-hoc-Parameter für die Ad-hoc-Verbindung unter Nutzung von NFC-Technik (near-field communication technique) mittels eines physischen Kontaktes zwischen dem ersten und dem zweiten Endgerät (UE1, UE2) sendet.

26. Endgerät nach Anspruch 25, **dadurch gekennzeichnet, dass** es so eingerichtet ist, dass es von der Betreiber-Dienstumgebungseinheit (RCS) einen Ad-hoc-Verschlüsselungsschlüssel bezüglich der Ad-hoc-Verbindung empfängt

27. Endgerät nach Anspruch 25 oder 26, **dadurch gekennzeichnet, dass** es so konfiguriert ist, dass es die erweiterte Kommunikation unter Nutzung eines Direktmodus des Kurzstrecken-Kommunikationsmediums (WLAN) ausführt.

28. Endgerät nach Anspruch 25, 26 oder 27, **dadurch gekennzeichnet, dass** die erweiterte Kommunikation wenigstens einen Dateitransferdienst, einen erweiterten VoIP-Dienst (enriched Voice over Internet Protocol service) oder/und einen Instant-Messaging-Dienst umfasst.

29. Endgerät nach einem der Ansprüche 25 bis 28, **dadurch gekennzeichnet, dass**, wenn die Einrichtung der wechselseitigen Ad-hoc-Verbindung zwischen dem ersten und dem zweiten Endgerät (UE1, UE2) fehlschlägt, das Verfahren umfasst, dass die Betreiber-Dienstumgebungseinheit (RCS) für die erweiterte Kommunikation zwischen dem ersten und dem zweiten Endgerät (UE1, UE2) genutzt wird.

30. Computerprogramm-Erzeugnis, das Programmcode-Mittel umfasst, **dadurch gekennzeichnet, dass** die Programmcode-Mittel zum Durchführen des Verfahrens nach einem der Ansprüche 1 bis 13 eingerichtet sind, wenn das Programm auf einem Computer oder einem Prozessor ausgeführt wird.

## Revendications

1. Procédé de fourniture d'un service de communications à un terminal d'utilisateur dans un système de communications (S), le système (S) comprenant
un réseau d'opérateur (IMS) comprenant une unité d'environnement de services d'opérateur (RCS),
au moins un réseau de communications (PLMN, LAN, IP sub),
un premier terminal d'utilisateur (UE1) connecté à un premier réseau de communications (PLMN, IP sub) ou à un deuxième réseau de communications (LAN, IP sub), et
un deuxième terminal (UE2) connecté au premier réseau de communications (PLMN, IP sub) ou au deuxième réseau de communications (LAN, IP sub),
le procédé comprenant les étapes suivantes :
recevoir (5-1), dans l'unité d'environnement de services d'opérateur (RCS), d'une demande de communication (3-1, 4-1) en provenance du premier terminal (UE1), la demande de communication indiquant que le premier terminal (UE1) souhaite démarrer une communication améliorée avec le deuxième terminal (UE2), et
transférer (5-1) la demande de communication (3-2, 4-2) de l'unité d'environnement de services d'opérateur (RCS) au deuxième terminal (UE2),
obtenir (3-1, 3-4, 3-5, 3-7, 3-9, 4-4, 4-5, 4-6, 4-7) des informations liées à une capacité de communication à courte portée (WLAN) du premier terminal (UE1) et du deuxième terminal (UE2) ;
dans lequel, si le premier terminal (UE1) et le deuxième terminal (UE2) sont capables d'utiliser un support de communication à courte portée approprié (WLAN), le procédé comprend les étapes
fournir (3-4, 3-6, 3-8, 4-5, 5-7) des informations sur la capacité de communication à courte portée du premier terminal au deuxième terminal et/ou vice versa ;
demander (3-8, 4-8, 5-9, 5-13) au premier ou au deuxième terminal (UE1, UE2) d'établir, sur la base des informations fournies, une connexion ad hoc mutuelle entre le premier et le deuxième terminaux (UE1, UE2), dans lequel la connexion ad hoc est mise en oeuvre en utilisant le support de communication à courte portée (WLAN) ;
utiliser (3-10, 3-11, 3-12, 4-9, 4-10, 6-6, 7-6, 8-7, 9-4) la connexion ad hoc pour la communication améliorée entre le premier et le deuxième terminaux (UE1, UE2) ; et
exécuter une authentification mutuelle du premier et du deuxième terminal (UE1, UE2) de sorte qu'un échange de clés de chiffrement sécurisées liées à la connexion ad hoc entre le premier et le deuxième terminaux (UE1, UE2) soit effectué via l'unité d'environnement de services d'opérateur (RCS),
**caractérisé en ce que** des paramètres ad hoc WLAN requis pour la connexion ad hoc sont transmis en utilisant une technique de communication en champ proche NFC au moyen d'un contact physique entre le premier et le deuxième terminaux (UE1, UE2).

2. Procédé selon la revendication 1, **caractérisé par** la fourniture, au premier terminal (UE1), d'informations sur un nom ad hoc du deuxième terminal (UE2).

3. Procédé selon la revendication 1 ou 2, **caractérisé par** la transmission, de l'unité d'environnement de services d'opérateur (RCS) au terminal (UE1, UE2), d'une clé de chiffrement ad hoc liée à la connexion ad-hoc.

4. Procédé selon l'une quelconque des revendications 1, 2 ou 3, **caractérisé en ce qu'**une vérification, consistant à savoir si le premier terminal (UE1) et le deuxième terminal (UE2) sont situés à proximité l'un de l'autre, est effectuée sur la base d'informations d'identification de cellule, d'informations de système mondial de positionnement, et/ou d'informations d'adresse de protocole Internet du terminal (UE1, UE2).

5. Procédé selon l'une quelconque des revendications 1 à 4, **caractérisé en ce que** la communication améliorée est effectuée en utilisant un mode direct du support de communication à courte portée (WLAN).

6. Procédé selon l'une quelconque des revendications 1 à 5, **caractérisé en ce que** la communication améliorée comprend au moins un parmi un service de transfert de fichier, un service voix sur protocole Internet VoIP enrichi, et un service de messagerie instantanée.

7. Procédé selon l'une quelconque des revendications 1 à 6, **caractérisé en ce que**, si l'établissement de la connexion ad hoc mutuelle entre le premier et le deuxième terminaux (UE1, UE2) échoue, le procédé comprend l'utilisation (4-11, 4-12) de l'unité d'environnement de services d'opérateur (RCS) pour la communication améliorée entre le premier et le deuxième terminaux (UE1, UE2).

8. Procédé selon l'une quelconque des revendications 1 à 7, **caractérisé en ce que** le au moins un réseau de communications comprend un réseau de communications mobile (PLMN).

9. Procédé selon l'une quelconque des revendications 1 à 8, **caractérisé en ce que** le au moins un réseau de communications comprend un réseau local (LAN).

10. Procédé selon l'une quelconque des revendications 1 à 7, **caractérisé en ce que** le au moins un réseau de communications comprend un sous-réseau de protocole Internet (IP sub).

11. Procédé selon l'une quelconque des revendications 1 à 10, **caractérisé en ce que** le support de communication à courte portée (WLAN) comprend un réseau local sans fil WLAN.

12. Procédé selon l'une quelconque des revendications 1 à 11, **caractérisé en ce que** les informations sur la capacité de communication à courte portée comprennent des informations sur la capacité du réseau local sans fil (WLAN) du terminal (UE1, UE2).

13. Procédé selon l'une quelconque des revendications 1 à 11, **caractérisé en ce que** le procédé comprend la notification à l'unité d'environnement de services d'opérateur (RCS) sur la connexion ad hoc NFC établie.

14. Système de communications (S) comprenant
un réseau d'opérateur (IMS) comprenant une unité d'environnement de services d'opérateur (RCS),
au moins un réseau de communications (PLMN, LAN, IP sub),
un premier terminal (UE1) connecté à un premier réseau de communications (PLMN, IP sub) ou à un deuxième réseau de communications (LAN, IP sub), et
un deuxième terminal (UE2) connecté au premier réseau de communications (PLMN, IP sub) ou au deuxième réseau de communications (LAN, IP sub),
le système étant configuré pour
recevoir, dans l'unité d'environnement de services d'opérateur (RCS), une demande de communication en provenance du premier terminal (UE1), la demande de communication indiquant que le premier terminal (UE1) souhaite démarrer une communication améliorée avec le deuxième terminal (UE2), et
transférer la demande de communication de l'unité d'environnement de services d'opérateur (RCS) au deuxième terminal (UE2),
obtenir des informations liées à une capacité de communication à courte portée (WLAN) du premier terminal (UE1) et du deuxième terminal (UE2) ;
dans lequel, si le premier terminal (UE1) et le deuxième terminal (UE2) sont capables d'utiliser un support de communication à courte portée approprié (WLAN), le système est configuré pour
fournir des informations sur la capacité de communication à courte portée du premier terminal au deuxième terminal et/ou vice versa ;
demander au premier ou au deuxième terminal (UE1, UE2) d'établir, sur la base des informations fournies, une connexion ad hoc mutuelle entre le premier et le deuxième terminaux (UE1, UE2), dans lequel la connexion ad hoc est mise en oeuvre en utilisant le support de communication à courte portée (WLAN) ;
utiliser la connexion ad hoc pour la communication améliorée entre le premier et le deuxième terminaux (UE1, UE2) ; et
exécuter une authentification mutuelle du premier et du deuxième terminal (UE1, UE2) de sorte qu'un échange de clés de chiffrement sécurisées liées à la connexion ad hoc entre le premier et le deuxième terminaux (UE1, UE2) soit effectué via l'unité d'environnement de services d'opérateur (RCS),
**caractérisé en ce que** le système est configuré pour transmettre des paramètres ad hoc WLAN requis pour la connexion ad hoc en utilisant une technique de communication en champ proche NFC au moyen d'un contact physique entre le premier et le deuxième terminaux (UE1, UE2).

15. Système selon la revendication 14, **caractérisé en ce qu'**il est configuré pour effectuer la communication améliorée en utilisant un mode direct du support de communication à courte portée (WLAN).

16. Système selon la revendication 14 ou 15, **caractérisé en ce que** la communication améliorée comprend au moins un parmi un service de transfert de fichier, un service voix sur protocole Internet VoIP enrichi, et un service de messagerie instantanée.

17. Système selon la revendication 14, 15 ou 16, **caractérisé en ce que**, si l'établissement de la connexion ad hoc mutuelle entre le premier et le deuxième terminaux (UE1, UE2) échoue, le système est configuré pour utiliser l'unité d'environnement de services d'opérateur (RCS) pour la communication améliorée entre le premier et le deuxième terminaux (UE1, UE2).

18. Système selon l'une quelconque des revendications 14 à 17, **caractérisé en ce que** le au moins un réseau de communications comprend un réseau de communications mobile (PLMN).

19. Système selon l'une quelconque des revendications 14 à 18, **caractérisé en ce que** le au moins un réseau de communications comprend un réseau local (LAN).

20. Système selon l'une quelconque des revendications 14 à 17, **caractérisé en ce que** le au moins un réseau de communications comprend un sous-réseau de protocole Internet (IP sub).

21. Système selon l'une quelconque des revendications 14 à 20, **caractérisé en ce que** le support de communication à courte portée (WLAN) comprend un réseau local sans fil WLAN.

22. Système selon l'une quelconque des revendications 14 à 21, **caractérisé en ce que** le système est configuré pour notifier à l'unité d'environnement de services d'opérateur (RCS) sur la connexion ad hoc NFC établie.

23. Premier terminal (UE1) pour un système de communications (S) comprenant
un réseau d'opérateur (IMS) comprenant une unité d'environnement de services d'opérateur (RCS), et
au moins un réseau de communications (PLMN, LAN, IP sub),
dans lequel le premier terminal (UE1) est connecté à un premier réseau de communications (PLMN, IP sub) ou à un deuxième réseau de communications (LAN, IP sub), le premier terminal (UE1) étant configuré pour
transmettre, à l'unité d'environnement de services d'opérateur (RCS), une demande de communication, la demande de communication indiquant que le premier terminal (UE1) souhaite démarrer une communication améliorée avec un deuxième terminal (UE2), dans lequel le deuxième terminal (UE2) est connecté au premier réseau de communications (PLMN, IP sub) ou au deuxième réseau de communications (LAN, IP sub),
fournir des informations liées à une capacité de communication à courte portée (WLAN) du premier terminal (UE1) ;
recevoir des informations sur la capacité de communication à courte portée du deuxième terminal ;
établir, sur la base desdites informations, une connexion ad hoc mutuelle entre le premier et le deuxième terminaux (UE1, UE2), dans lequel la connexion ad hoc est mise en oeuvre en utilisant un support de communication à courte portée approprié (WLAN) ;
utiliser la connexion ad hoc pour la communication améliorée entre le premier et le deuxième terminaux (UE1, UE2) ; et
exécuter une authentification mutuelle du premier terminal (UE1), de sorte qu'un échange de clés de chiffrement sécurisées liées à la connexion ad hoc entre le premier et le deuxième terminaux (UE1, UE2) soit effectué via l'unité d'environnement de services d'opérateur (RCS),
**caractérisé en ce que** le premier terminal (UE1) est configuré pour transmettre des paramètres ad hoc WLAN requis pour la connexion ad hoc en utilisant une technique de communication en champ proche NFC au moyen d'un contact physique entre le premier et le deuxième terminaux (UE1, UE2).

24. Premier terminal selon la revendication 23, **caractérisé en ce qu'**il est configuré pour recevoir des informations sur un nom ad hoc du deuxième terminal (UE2).

25. Deuxième terminal (UE2) pour un système de communications (S), le système comprenant
un réseau d'opérateur (IMS) comprenant une unité d'environnement de services d'opérateur (RCS), et
au moins un réseau de communications (PLMN, LAN, IP sub),
dans lequel le deuxième terminal (UE2) est connecté à un premier réseau de communications (PLMN, IP sub) ou à un deuxième réseau de communications (LAN, IP sub), le deuxième terminal (UE2) étant configuré pour
recevoir, de l'unité d'environnement de services d'opérateur (RCS), une demande de communication indiquant qu'un premier terminal (UE1) souhaite démarrer une communication améliorée avec le deuxième terminal (UE2), dans lequel le premier terminal (UE1) est connecté au premier réseau de communications (PLMN, IP sub) ou au deuxième réseau de communications (LAN, IP sub),
recevoir des informations liées à une capacité de communication à courte portée (WLAN) du premier terminal (UE1) ;
fournir des informations sur la capacité de communication à courte portée du deuxième terminal ;
établir, sur la base desdites informations, une connexion ad hoc mutuelle entre le premier et le deuxième terminaux (UE1, UE2), dans lequel la connexion ad hoc est mise en oeuvre en utilisant le support de communication à courte portée (WLAN) ;
utiliser la connexion ad hoc pour la communication améliorée entre le premier et le deuxième terminaux (UE1, UE2) ; et
exécuter une authentification mutuelle du deuxième terminal (UE2), de sorte qu'un échange de clés de chiffrement sécurisées liées à la connexion ad hoc entre le premier et le deuxième terminaux (UE1, UE2) soit effectué via l'unité d'environnement de services d'opérateur (RCS),
**caractérisé en ce que** le deuxième terminal (UE2) est configuré pour transmettre des paramètres ad hoc WLAN requis pour la connexion ad hoc en utilisant une technique de communication en champ proche NFC au moyen d'un contact physique entre le premier et le deuxième terminaux (UE1, UE2).

26. Terminal selon la revendication 25, **caractérisé en ce qu'**il est configuré pour recevoir, de l'unité d'environnement de services d'opérateur (RCS), une clé de chiffrement ad hoc liée à la connexion ad-hoc.

27. Terminal selon la revendication 25 ou 26, **caractérisé en ce qu'**il est configuré pour effectuer la communication améliorée en utilisant un mode direct du support de communication à courte portée (WLAN).

28. Terminal selon la revendication 25, 26 ou 27, **caractérisé en ce que** la communication améliorée comprend au moins un parmi un service de transfert de fichier, un service voix sur protocole Internet VoIP enrichi, et un service de messagerie instantanée.

29. Terminal selon l'une quelconque des revendications 25 à 28, **caractérisé en ce que**, si l'établissement de la connexion ad hoc mutuelle entre le premier et le deuxième terminaux (UE1, UE2) échoue, il est configuré pour utiliser l'unité d'environnement de services d'opérateur (RCS) pour la communication améliorée entre le premier et le deuxième terminaux (UE1, UE2) .

30. Produit de programme informatique comprenant des moyens de code de programme, **caractérisé en ce que** les moyens de code de programme sont adaptés pour effectuer les étapes du procédé selon l'une quelconque des revendications 1 à 13 lorsque le programme est exécuté sur un ordinateur ou sur un processeur.
